Europäisches Patentamt

European Patent Office

Office européen des brevets

(19)

(11) Veröffentlichungsnummer: **0 041 604**

A2

(12)

# EUROPÄISCHE PATENTANMELDUNG

(21) Anmeldenummer: 81102890.1

(22) Anmeldetag: 15.04.81

(51) Int. Cl.³: **B 29 C 17/08**
E 04 C 2/20, E 04 C 2/38
E 04 B 1/40

(30) Priorität: 06.06.80 DE 8015106 U
08.10.80 DE 3037964

(43) Veröffentlichungstag der Anmeldung:
16.12.81 Patentblatt 81/50

(84) Benannte Vertragsstaaten:
AT BE CH DE FR GB IT LI NL SE

(71) Anmelder: Schäfer, Paul
Hiltruper Strasse 2
D-4400 Münster-Wolbeck(DE)

(72) Erfinder: Schäfer, Paul
Hiltruper Strasse 2
D-4400 Münster-Wolbeck(DE)

(74) Vertreter: Habbel, Hans-Georg, Dipl.-Ing.
Postfach 3429 Am Kanonengraben 11
D-4400 Münster(DE)

(54) Verfahren und Vorrichtung zum Schneiden und Profilieren thermoplastischer Kunststoffe und derart hergestellte Verkleidungsplatten.

(57) Die Erfindung schlägt ein Verfahren zur Herstellung von aus Kunststoff bestehenden Verkleidungsplatten (1,2) bezüglich der Anordnung von Stabilisierungs- und Trägerelementen vor, wobei die erforderlichen Aufnahmenuten (3,4,7,8) oder -öffnungen durch einen Schmelzvorgang im Kunststoff herbeigeführt werden. Die Erfindung schlägt weiterhin eine Verkleidungsplatte vor, die mit über die Oberkante der Plattenränder hinausstehenden Steckverbindungsmitteln ausgerüstet ist.

./...

Fig.1

0041604

- 1 -

<u>Verfahren und Vorrichtung zum Schneiden und Profi-
lieren thermoplastischer Kunststoffe und derart hergestellte Verkleidungsplatten</u>

Die Erfindung bezieht sich auf ein Verfahren zum
Schneiden und Profilieren von aus thermoplastischen
Kunststoffen, z.B. Polystyrol, bestehenden Bauteilen
mittels eines erhitzten Werkzeuges. Die Erfindung bezieht sich weiterhin auf Vorrichtungen zum Durchführen
dieses Verfahrens.

Aus thermoplastischen Kunststoffen, wie beispielsweise
Polystyrol bestehende Bauteile, sind als Verkleidungsplatten in großem Umfang im Einsatz. Hierbei spielt
insbesondere die Wärmedämmung eine erhebliche Rolle.
Zur Halterung und Anbringung derartiger Verkleidungsplatten ist es dabei vielfach erforderlich, daß diese
Verkleidungsplatten oder Bauteile mit Nuten versehen
werden, wobei die Nuten in der Herstellungsstätte für die Verkleidungsplatten eingeschnitten werden können, häufig es aber auch erforderlich ist, daß derartige Nuten am Einsatzort der Platte hergestellt werden sollen. Das Einschneiden derartiger Nuten erfolgte bisher durch Fräswerkzeuge, die spanabhebend und werkstoffzerkleinernd wirken, wodurch einerseits ein Werkstoffverlust eintritt, andererseits das Entfernen der Späne und Stäube Schwierigkeiten und Probleme bereitet.

Auch das Beschneiden bereits vorgefertigter Platten am Einsatzort bereitet häufig Schwierigkeiten, da diese Arbeiten mit Sägen durchgeführt werden müssen, die zu einem Verschmutzen der Umgebung durch das entstehende Sägemehl führen und außerdem schnell zu Atembeschwerden der Arbeiter führen können.

Es ist bereits bekanntgeworden, insbesondere Polystyrolschaumstoffplatten mittels durch Strom erhitzter Werkzeuge zu schneiden. Der Einsatz derartiger Werkzeuge erfolgt dabei vorzugsweise im Spielzeugbereich, d.h. es werden entsprechende Baukästen den Kindern zur Verfügung gestellt, bei denen auf Polystyrolschaumstoffplatten Bilder oder Figuren aufgedruckt sind, die nunmehr mit laubsägeartigen Schneideinrichtungen ausgeschnitten werden können, wobei anstelle des sägeblattartigen Laubsägeblattes nunmehr ein erhitzter Draht eingesetzt wird, der ein Aufschneiden der Platte ermöglicht. Bei diesen bekannten Schneidwerkzeugen erfolgt ausschließlich ein Trennvorgang durch den erhitzten eine relativ kleine Oberfläche aufweisenden Draht, d.h. die so beschnittene Fläche des Polystyrolschaumstoffkörpers weist offene Poren auf. Der Einsatz derartiger Schneidwerkzeuge im Handwerksbereich hat sich nicht bewährt, da die Heizdrähte zu schnell zerstört wurden.

Der Erfindung liegt die Aufgabe zugrunde, ein Verfahren und eine Vorrichtung zur Durchführung dieses Verfahrens zu schaffen, bei welchem die Oberfläche des thermoplastischen Kunststoffes nicht nur durch das erhitzte Werkzeug beschnitten, sondern auch flächig erschmolzen wird, so daß dadurch die Oberfläche der Schnittkante verschlossen wird und zusätzlich eine Stabilisierung dieser Fläche durch das erschmolzene Material erreicht wird.

Weiterhin liegt der Erfindung die Aufgabe zugrunde, eine Verkleidungsplatte zu schaffen, die über einfache Steckelemente untereinander verbindbar sind.

- 4 -

Diese der Erfindung zugrundeliegende Aufgabe wird dadurch gelöst, daß ein flächiger Werkzeugkopf auf eine über der Schmelztemperatur des Werkstückes liegende Temperatur erhitzt und das Werkstück relativ gegenüber dem Werkzeugkopf derart bewegt wird, daß nur eine geringe Schmelztiefe im Werkstück bei Kontakt des Werkzeugkopfes mit dem Werkstück bedingt wird.

Durch die Erfindung wird also ein Werkzeugkopf geschaffen, der nicht nur wie die bisher bekannten Heizdrahtschneidwerkzeuge kurzfristig mit der Oberfläche des thermoplastischen Kunststoffes in Berührung steht, sondern aufgrund seiner flächigen Ausbildung über längere Zeit mit dem Kunststoff in Kontakt steht, so daß ein Anschmelzen der Oberseite des Kunststoffes bedingt wird.

Werden beispielsweise mit einem solchen Werkzeugkopf Nuten in eine Platte eingeschmolzen, dann wird erreicht, daß der Werkstoff, der im Bereich der Nut zur Verfügung steht, nun nicht wie bei den bekannten fräsend arbeitenden Werkzeugen entfernt wird, sondern dieser Werkstoff wird zusammengepreßt und legt sich als zusätzliche Schicht an den Boden und die Seitenwandungen der Nut an und bewirkt hier nicht nur eine Stabilisierung des Nutbereiches, sondern eine Stabilisierung der gesamten Platte, da diese Werkstoffschicht, die aus dem erschmolzenen thermoplastischen Kunststoff besteht, eine relativ hohe Festigkeit aufweist.

Wird mit dem erfindungsgemäßen Verfahren die Randkante eines Werkstückes geschnitten, dann wird durch die flächige Anlage des Werkzeugkopfes diese Randkante verschlossen, so daß auf dieser Fläche die Oberfläche des thermoplastischen Kunststoffes versiegelt wird. In vielen Einsatzbereichen ist das eine wichtige Maßnahme, um dadurch das Eindringen von Feuchtigkeit in das Platteninnere und damit das Speichern von Feuchtigkeit zu vermeiden.

Die zur Durchführung des erfindungsgemäßen Verfahrens dienenden Werkzeuge kennzeichnen sich entweder dadurch, daß ein Handwerkzeug geschaffen wird, d.h. es wird ein Werkzeuggriff zur Verfügung gestellt, der mit den erforderlichen Stromanschlüssen ausgerüstet ist, der die Steuerschalter und Temperaturregler aufweist und der ggf. während der Betätigung des Werkzeuges in seiner Schmelztemperaturhöhe einsteuerbar ist, wobei nunmehr auf diesen Werkzeuggriff ein in bestimmter Weise an seine Aufgabe angepaßtes Werkzeug, d.h. ein Werkzeugkopf aufgesetzt werden kann, der

- 6 -

nunmehr den Schmelzvorgang ausführt.

In gleicher Weise kann natürlich auch ein größerer Träger eingesetzt werden, der eine Vielzahl von Werkzeugköpfen trägt, wobei nunmehr die thermoplastische Kunststoffplatte gegenüber diesem Träger relativ bewegt wird, so daß dadurch beispielsweise das Schneiden oder Einschmelzen von Nuten erreicht wird.

Die sich an den Werkzeugköpfen ansetzenden Werkstoffschichten schmelzen jeweils beim Neueinsatz des Werkzeugkopfes ab und werden durch den schleifenden Kontakt zwischen dem Werkzeugkopf und der Oberseite der Kunststoffplatte entfernt.

Weiterhin bezieht sich die Erfindung auf eine Verkleidungsplatte, so wie sie in den Unteransprüchen definiert ist, d.h. bei der zwei Plattenteile mit ihrer mit Öffnungen versehenen Seite aufeinandergeklebt werden, wobei es auch durchaus möglich ist, die Öffnungen nur in einer Platte vorzusehen. Als Trägerelemente können Metall-, Holz- oder Kunststoffleisten eingesetzt werden, wobei beim Einsatz von Metallleisten vorzugsweise eine Langlochbohrung vorgesehen wird, um derart ein Befestigen der Platten mittels Schrauben durch diese Langlochbohrung hindurch an der

- 7 -

Tragfläche, beispielsweise einer Hausfassade od. dgl.,
zu ermöglichen.

Ausführungsbeispiele der Erfindung werden nachfolgend
anhand der Zeichnungen erläutert. Die Zeichnungen
zeigen dabei in

Fig. 1          eine erste Ausführungsform der Erfindung
                in einer aufgeklappten Darstellung der
                beiden miteinander zu verbindenden
                Plattenteile, in

Fig. 2          in größerem Maßstab die Wirkung der
                eingeschmolzenen Öffnungen für die
                Trägerelemente, in

Fig. 3          eine abgeänderte Ausführungsform der
                Platte, in

Fig. 4          eine wiederum abgeänderte Ausführungsform der Platte mit anders ausgebildeten Trägerelementen, in

Fig. 5          eine Platte, die einteilig hergestellt
                ist, aber trotzdem die entsprechenden
                eingeschmolzenen Öffnungen für die
                Trägerelemente aufweist und in

Fig. 6          in einem größeren Maßstab einen Abschnitt eines Trägerelementes.

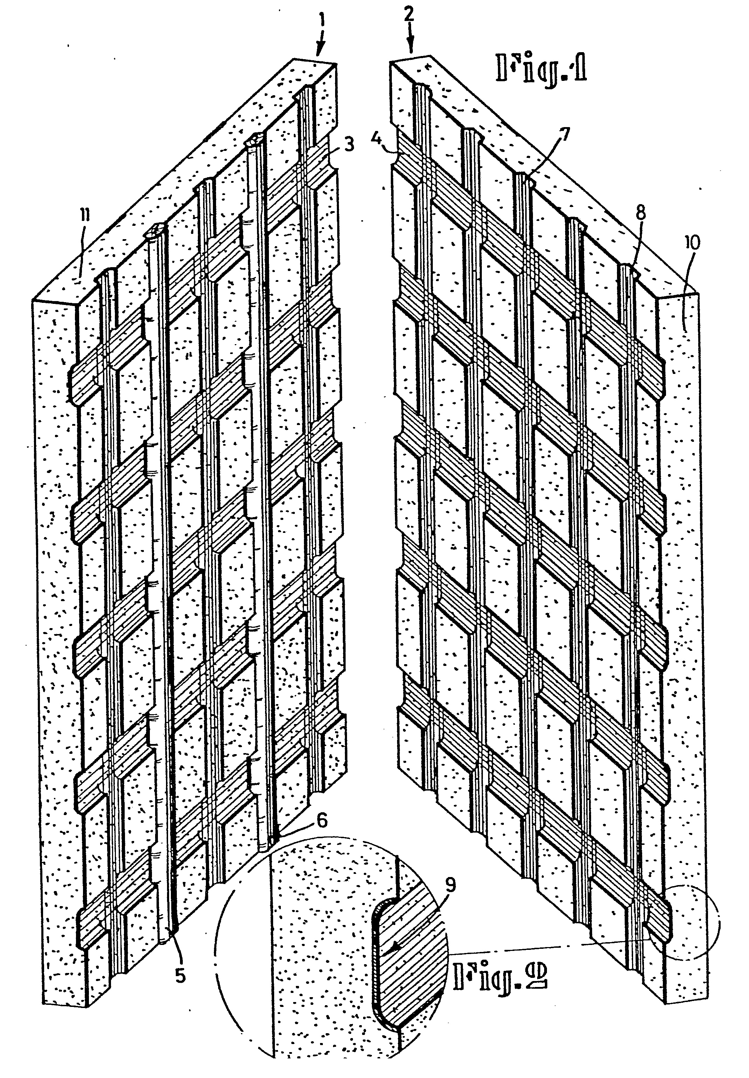

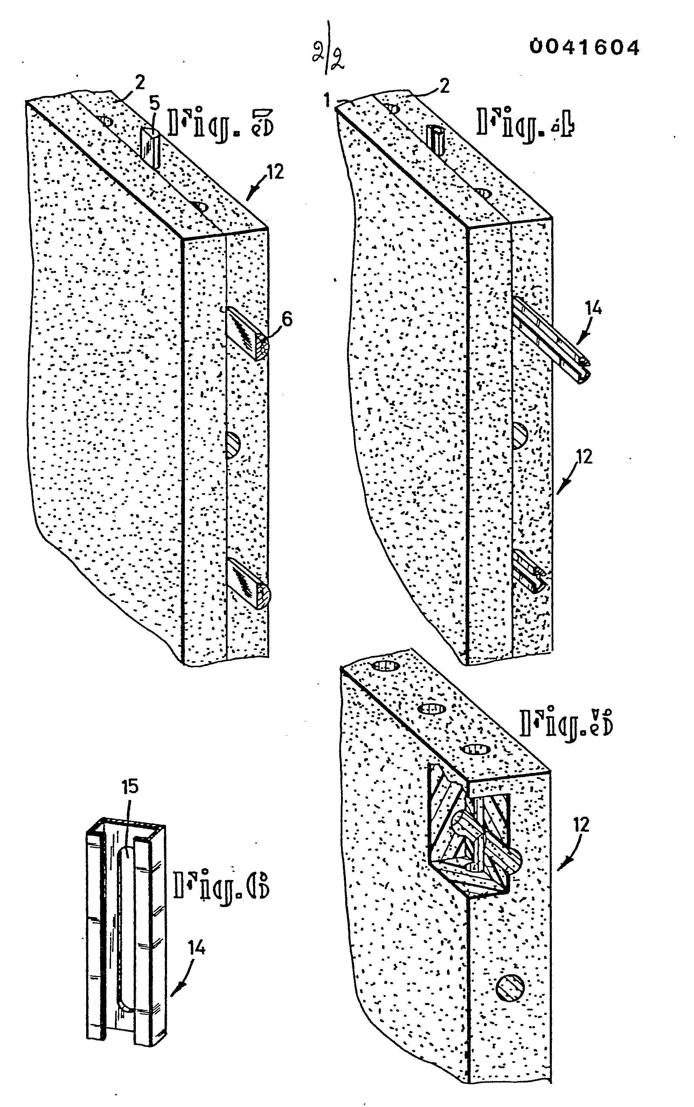

In Fig. 1 sind zwei Werkstoffplatten 1 und 2 dargestellt, die beispielsweise in ihrem zusammengeklappten Zustand eine Verkleidungsplatte 12 (Fig. 3 bis 5) bilden, wobei im zusammengeklappten Zustand dann die Platte in ihrer Mittelschicht von einer Vielzahl von Nuten 3 und 4 durchzogen wird, die der Aufnahme von Trägerelementen 5 und 6 oder beispielsweise von Stabilisierungselementen dienen. Das Herstellen der Nuten 3 und 4 bzw. der in Längsrichtung verlaufenden Nuten 7 und 8 erfolgt nunmehr gemäß der Erfindung nicht durch ein fräsend arbeitendes Werkzeug, sondern durch einen Werkzeugkopf, der schmelzend die Nuten 3,4,7,8 herstellt.

In einem größeren Maßstab ist in Fig. 2 dargestellt, daß durch Herstellen der Schmelznut nunmehr am Boden- und Seitenbereich der Nut eine erschmolzene, feste nicht mehr schaumstoffartige, sondern glasartige Schicht 9 erzielt wird, die zur Festigkeit nicht nur der Nut, sondern zur Festigkeit der gesamten Platte beiträgt, da diese Schmelzschicht eine hohe Festigkeit besitzt.

Gleichzeitig wird durch diese Schmelzschicht 9 die Außenfläche der Nut versiegelt, so daß dann, wenn die Seitenkanten der Platte, die beispielsweise mit 1o

und 11 bezeichnet sind, ebenfalls mit einem einen Schmelzeffekt bewirkenden Werkzeug bearbeitet werden, auch diese Seitenkanten gegenüber dem Eindringen von Feuchtigkeit verschlossen werden können.

Die erfindungsgemäße Verfahrensweise hat folgende Vorteile:

Es werden die bisher entstehenden Frässtäube und Frässpäne vermieden.

Das lästige Arbeiten mit einem Sägewerkzeug am Einsatzbereich der Platte wird vermieden, so daß auch dort der Anfall von Sägemehl aus dem Material der Platte vermieden wird.

Durch das Einfräsen der Nuten erfolgt nicht eine Materialschwächung der Platte, sondern der Werkstoff der Platte wird in vollem Umfang erhalten und wird zusätzlich als Schmelzschicht im Boden der Nut angelagert.

Die Stabilität der Platte wird durch die höhere Festigkeit der Schmelzschicht erhöht.

Beim Überkopfarbeiten beim Anbringen der Platten sind Korrekturen in der Form der Platte möglich, ohne daß der Arbeiter einen Atemschutz oder einen Augenschutz tragen muß.

Durch Einsatz unterschiedlicher Werkzeugköpfe sind schnell und problemlos unterschiedlich geformte Nuten herzustellen, unabhängig ob diese Nuten als Schwalbenschwanz oder als sich nach oben hin öffnende Nuten ausgebildet sind.

In Fig. 3 bis 6 sind Ausführungsformen dargestellt und es ist erkennbar, daß es möglich ist, nur eine der beiden Plattenhälften, beispielsweise die Platte 2, mit den erfindungsgemäßen Nuten zu versehen, wobei in diese Nuten dann die Trägerelemente 5 und 6 eingesteckt werden, die bei der Ausführungsform gemäß Fig. 3 aus Holz bestehen.

Bei der Ausführungsform gemäß Fig. 4 bestehen diese Trägerelemente 14 aus Metall und Fig. 6 zeigt deutlich, daß in diesen Trägerelementen dann Langlochbohrungen vorgesehen werden können, die mit dem Bezugszeichen 15 versehen sind und die das Einsetzen von Schrauben möglich machen, ohne daß ein besonderes Anbohren des metallischen Trägerelementes erforderlich ist.

Zwischen die beiden Plattenhälften 1 und 2 können Gewebeschichten zur Stabilisierung eingesetzt werden,

- 11 -

und es ist durchaus auch möglich, hier Dampfsperren einzubauen, so daß dadurch insbesondere bei Außenfassaden den erforderlichen Vorschriften entsprochen werden kann.

Selbstverständlich können die Trägerelemente auch aus Kunststoff bestehen, wobei bei Kunststoffträgerelementen ebenfalls der Einsatz von Langlochbohrungen vorgesehen sein kann oder aber auch, da Kunststoff relativ leicht zu durchbohren ist, diese Trägerelemente einstückig ohne Bohrungen ausgeführt werden können.

Die Trägerelemente können in den ihnen zugeordneten Nuten eingeklebt werden und sie können ganz durchlaufend gestaltet sein, so wie dies in Fig. 1 dargestellt ist oder sie können nur teilweise in die Platte ragen, wobei eine Kombination von ganz durchlaufenden Trägerelementen, die dann als Stabilisierungselemente wirken und eingesteckten Trägerelementen, die dann der Verbindung dienen, vorgesehen sein kann.

Fig. 3 verdeutlicht, daß die Platte auch einstückig ausgebildet sein kann und daß dann die erforderlichen Bohrungen zur Aufnahme der Stabilisierungselemente oder der Trägerelemente von außen angebohrt werden.

0041604

- 1 -

Patentansprüche:

1. Verfahren zum Schneiden und Profilieren von aus thermoplastischen Kunststoffen, z.B. Polystyrol, bestehenden Bauteilen mittels erhitzter Werkzeuge, dadurch gekennzeichnet, daß ein flächiger Werkzeugkopf auf eine über der Schmelztemperatur des Werkstückes liegende Temperatur erhitzt und das Werkstück relativ gegenüber dem Werkzeugkopf derart bewegt wird, daß nur eine geringe Schmelztiefe im Werkstück bei Kontakt des Werkzeugkopfes mit dem Werkstück bedingt wird.

2. Vorrichtung zum Durchführen des Verfahrens nach Anspruch 1, gekennzeichnet durch ein Handwerkzeug mit einem die erforderlichen Steuerelemente aufnehmenden Griff und einem auswechselbaren Werkzeugkopf.

3. Vorrichtung zum Durchführen des Verfahrens nach Anspruch 1, gekennzeichnet durch eine Vielzahl von Werkzeugköpfen an einem Träger, der eine Relativbewegung zum Werkstück ermöglicht.

4. Verkleidungsplatte mit in oder an dieser angeordneten Trägeröffnungen zur Aufnahme von Halteelementen, gekennzeichnet durch in die Platte (12) eingesetzte Trägerelemente (5, 6, 14) aus einem tragfähigen Werkstoff.

5. Verkleidungsplatte nach Anspruch 4, gekennzeichnet durch Holzleisten als Trägerelemente (5, 6).

6. Verkleidungsplatte nach Anspruch 4, gekennzeichnet durch Metalleisten als Trägerelemente (14).

7. Verkleidungsplatte nach Anspruch 4 und 6, gekennzeichnet durch Langlochbohrungen in den Metalleisten (14).

8. Verkleidungsplatte nach Anspruch 4 bis 7, dadurch gekennzeichnet, daß die Trägerelemente (5, 6, 14) die Platte ganz oder nur teilweise durchsetzen.

9. Verkleidungsplatte nach Anspruch 4, dadurch gekennzeichnet, daß die Trägerelemente aus Kunststoff bestehen.

0041604

- 3 -

10. Verkleidungsplatte wenigstens nach Anspruch 4, gekennzeichnet durch zwei miteinander verbundene und mit ihren der Aufnahme der Trägerelemente dienenden Öffnungen aufeinanderzugerichtete Plattenteile (1, 2).

11. Verkleidungsplatte nach einem oder mehreren der vorhergehenden Ansprüche 4 bis 1o, gekennzeichnet durch eine zwischen die beiden Plattenteile (1, 2) eingeklebte Gewebebahn.

12. Verkleidungsplatte nach einem oder mehreren der vorhergehenden Ansprüche 4 bis 11, gekennzeichnet durch eine zwischen die beiden Platten eingeklebte Dampfsperre.

13. Verkleidungsplatte nach einem oder mehreren der vorhergehenden Ansprüche 4 bis 12 hergestellt nach dem Verfahren nach Anspruch 1.

Fig. 1

Fig. 2

Fig. 3

Fig. 4

Fig. 5

Fig. 6